# EUROPEAN PATENT SPECIFICATION

(11) **EP 1 234 007 B1**
(45) Date of publication and mention of the grant of the patent: **18.02.2004**
(21) Application number: 00973152.2
(22) Date of filing: 16.11.2000
(51) Int. Cl.: C09B 69/10

(54) **OLIGOMERIC METHINE DYES**
OLIGOMERISCHE METHINFARBSTOFFE
COLORANTS DE METHINE OLIGOMERIQUES

(30) Priority: 18.11.1999 CH 210299
(43) Date of publication of application: 28.08.2002
(73) Proprietor: Clariant Finance (BVI) Limited, Road Town, Tortola (VG); CLARIANT INTERNATIONAL LTD., 4132 Muttenz (CH)
(72) Inventor: GEIWIZ, Jürgen, 79541 Lörrach-Hauingen (DE)
(74) Representative: Kachholz, Traudel
(86) International application number: PCT/IB2000/001674
(87) International publication number: WO 2001/036543

(56) References cited:
- WO-A-96/18697
- GB-A- 1 325 615

## Description

GB 1325615 relates to a process for producing water-soluble dyes which comprises a first stage reacting an aziridine compound with a dye or dye intermediate having a substituent thereon which is reactive with said aziridine compound.and a second stage of reacting the resulting intermediate with further of said aziridine at a temperature of from 60 to 120°C. in the presence of at least a catalytic amount of an acid catalyst or an alkylating agent whereby polymerization occurs and opening of the aziridine ring of said intermediate is effected if such a ring is still present.

GB 1234710 described a process for the production of water-soluble sulfur dyes by reacting water-insoluble sulfur dyes with alkyleneimines such as ethylene-imine. The resulting dyes may be used without reducing agents and have excellent affinity for cellulose-containing materials.

DE1419797 describes the preparation of high-molecular weight dyestuff derivatives by reacting amino and/or imino group-containing polymers such as aminated starch or aminated cellulose with reactive dyestuffs. In this process, it is also possible to employ dyestuff intermediates in lieu of said reactive dyestuffs and after their reaction convert the same into dyes either by condensation, by coupling or by diazotization plus coupling.

However, the present invention relates to compounds or their mixtures obtainable by reacting in a first reaction step a diamine of the following formula (I) 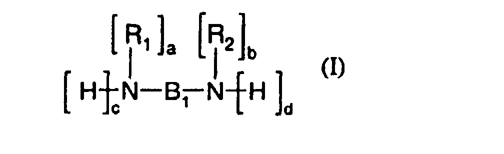 where
R₁ and R₂ are independently substituted or unsubstituted C₁₋₄alkyl or substituted or unsubstituted phenyl,
B₁ is C₂₋₁₀alkylene. which may optionally be interrupted by one or more atoms selected from the group consisting of N, O and S, preferably by O, and which may additionally be substituted,
a, b, c and d are each 0, 1, or 2, subject to the provisos that the sum a+c=2 and the sum b+d=2,
at a temperature of 10-50°C, preferably 15-40°C, particularly preferably 20-30°C, with at least 2.5 equivalents of a compound of the formula XB₂Y where
B₂ is C₁₋₁₀alkylene, which may optionally be interrupted by one or more atoms selected from the group consisting of N, O and S, preferably by O and which may additionally be substituted, and
X and Y are independently a leaving group, preferably halogen, particularly preferably Cl, or a group suitable for alkylating N, for example epoxide, and
in a second reaction step the reaction solution being reacted with a compound D or a plurality of compounds D,
where D is one of the following compounds: 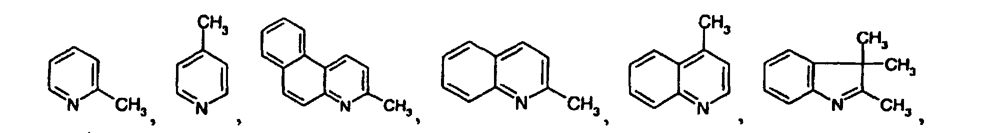 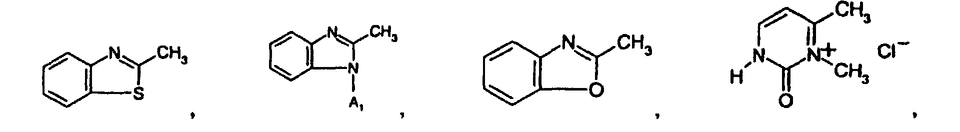 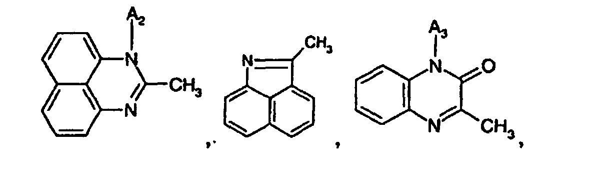 where A₁, A₂ and A₃ are independently C₁₋₄alkyl, benzyl, cyclohexyl, hydroxyalkyl or C₂₋₃alkenyl and the rings of the above radicals may be unsubstituted or substituted by halogen, cyano, C₁₋₄alkyl, C₁₋₄hydroxyalkyl or C₁₋₄alkoxy,
or D is HO⁻, N,N-di-C₁₋₄alkylamines or cycloamines selected from the group consisting of morpholine, piperazine and piperidine,
at a temperature of 70-150°C, preferably 80-120°C, particularly preferably 90-110°C,
and in a third reaction step the reaction solution being reacted with a compound of the formula (II) 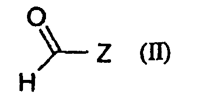 or a mixture thereof,
where Z is phenyl unsubstituted or substituted by hydroxyl, alkoxycarbonyl, N-substituted or unsubstituted carbamoyl, alkyl, alkoxy, amino or substituted amino, unsubstituted or alkyl-, alkoxy-, hydroxyl-, carboxyl- or (substituted amino)-substituted naphthyl, styryl, furyl, thienyl, pyridyl, indolyl, benzofuryl, benzothienyl, pyrazolyl, oxazolyl, thiazolyl, triazolyl, oxadiazolyl, thiadiazolyl, benzimidazolyl, indazolyl, benzoxazolyl, benzothiazolyl, carbazolyl, phenothiazinyl or phenoxazinyl, especially methoxycarbonylphenyl, ethoxycarbonylphenyl, hydroxyphenyl, dihydroxyphenyl, aminocarbonylphenyl, dimethylamino-carbonylphenyl, diethylaminocarbonylphenyl, methoxyphenyl, dimethoxyphenyl, trihydroxyphenyl, trimethoxyphenyl, ethoxyphenyl, butoxyphenyl, phenoxy-phenyl, aminophenyl, methylaminophenyl, ethylaminophenyl, benzylaminophenyl, butyl-aminophenyl, phenylaminophenyl, cyanoethylaminophenyl, dimethylaminophenyl, dimethylaminomethylphenyl, dimethylaminomethoxyphenyl, dimethylaminocarbomethoxyphenyl, diethylamino-phenyl, diethylaminomethylphenyl, ethoxydiethylaminophenyl, dipropylamino-phenyl, di-n-butylaminophenyl, dibenzylaminophenyl, di-β-cyanoethy laminophenyl, di-β-methoxyethylaminophenyl, N-methyl-N-ethylaminophenyl, N-butyl-N-methylaminophenyl, N-methyl-N-benzylaminophenyi, N-ethyl-N-methoxybenzyl-aminophenyl, N-cyclohexyl-N-benzylaminophenyl, N-β-cyanoethyl-N-benzylamino-phenyl, N-β-ethoxyethyl-N-benzylaminophenyl, N-β-methoxycarbonylethyl-N-benzylaminophenyl, di-benzylaminochlorophenyl, dibenzyl-aminomethoxyphenyl, dibenzyl-aminomethylphenyl, N-methyl-N-β-cyanoethylamino-phenyl, N-ethyl-N-β-cyanoethylaminophenyl, N-propyt-N-β-cyanoethylaminophenyl, N-butyl-N-β-cyanoethylaminophenyl, N-methyl-N-β-methoxycarbonyl-ethyl amino-phenyl, N-methyl-N-β-ethoxycarbonylethylaminophenyl, N-methyl-N-β-carbamoylethylaminophenyl, N-methyl-N-(3-dimethylcarbamoylethylaminophenyl, N-ethyl-N-β-methoxycarbonyl-ethylaminophenyl, N-ethyt-N-β-ethoxycarbonylethylamino-phenyl, N-ethyl-N-β-carbamoylethylaminophenyl, piperidinophenyl, pyrrolidino-phenyl, morpholino-phenyl, thiamorpholinophenyl, piperazinophenyl, N-methyl-piperazinophenyl, N-benzylpiperazino-phenyl, N-methyl-N-phenylaminophenyl, N-cyanoethyl-N-phenyl-aminophenyl, diphenyl-aminophenyl, N-methyl-N-4-ethoxy-phenylaminophenyl, N-methyl-N-4-methoxyphenylaminophenyl, N-methyl-N-4-methylphenylaminophenyl, N-methyl-N-2-methylphenylamino-phenyl, N-methyl-N-cyanomethylaminophenyl, N-ethyl-N-cyanomethylaminophenyl, N-benzyl-N-cyanomethylaminophenyl, N-β-cyanoethyl-N-cyanomethylaminophenyl, N-methyl-N-β-acetoxyethylaminophenyl, N-ethyl-N-β-acetoxyethylaminophenyl, N-benzyl-N-β-propoxyethylaminophenyl, N-ethyl-N-β-oxethylaminophenyl, N-methyl-N-β-oxethylaminophenyl, dimethylaminohydroxyphenyl, diethylaminohydroxyphenyl, dibenzyl-aminohydroxyphenyl, dimethylaminoacetylaminophenyl, diethylamino-acetylaminophenyl, N-ethyl-N-β-dimethyl-aminoethylaminophenyl, N-methyl-N-β-dimethylaminoethylamino-phenyl, N-benzyl- N-β-dimethylaminoethylaminophenyl, N-β-cyanoethyl-N-β-dimethylaminoethylaminophenyl, N-β-methoxycarbonylethyl-N-β-dimethylaminoethylaminophenyl, N-β-oxethyl-N-p-dimethyl-aminoethylamino-phenyl, N-β-methoxy-ethyl-N-β-dimethyl-aminoethylaminophenyl, N-ethyl-N-β-diethylaminoethylaminophenyl, N-ethyl-N-β-di-enzylaminoethylaminophenyl, N-ethyl-N-β-piperidinoethylaminophenyl, N-benzyl-N-β-morpholinoethylaminophenyl, N-ethyl-N-β-trimethylammonium ethylaminophenyl chloride, N-methyl-N-β-trimethyl-ammonium ethylaminophenyl chloride, N-methyl-N-β-diethylbenzyl-ammonium ethyl-aminophenyl chloride, N-benzyl-N-β-dimethylbenzylammonium ethylaminophenyl chloride, N-ethyl-N-β-pyridinium ethylaminophenyl chloride, dimethylaminonaphthyl, diethylamino-naphthyl, dibenzyl-aminonaphthyl, tolylmethylaminonaphthyl, ethoxyphenyl-methylaminonaphthyl, hydroxynaphthyl, hydroxymethoxycarbonylnaphthyl, methoxycarbonylmethoxynaphthyl, 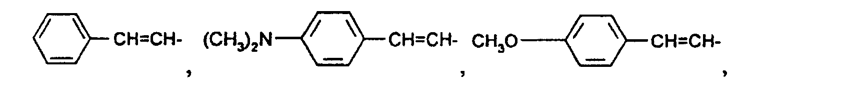 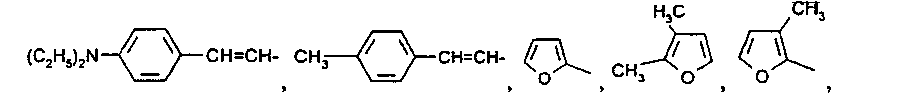 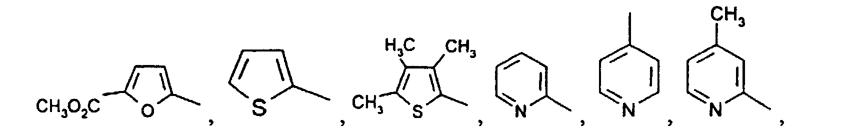 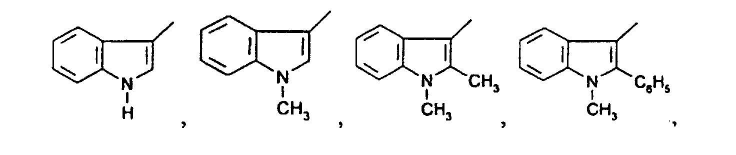 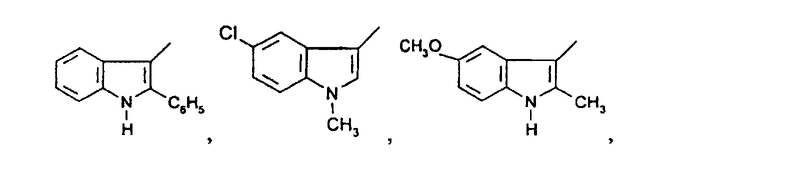 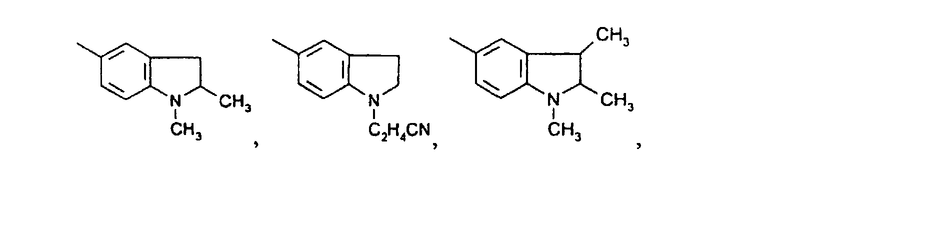 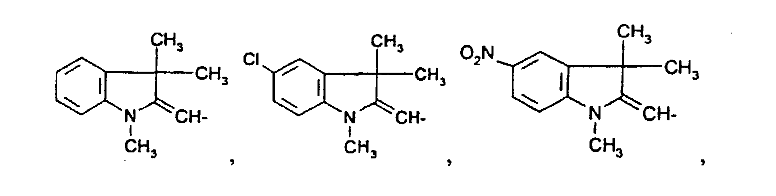 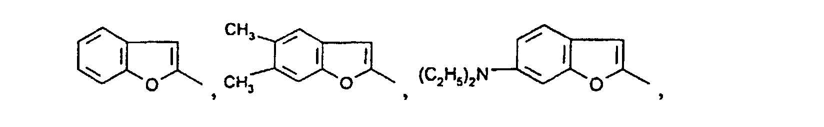 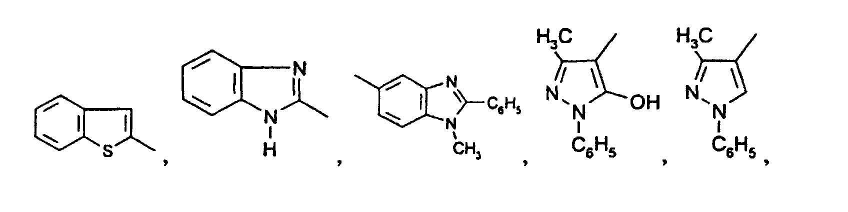 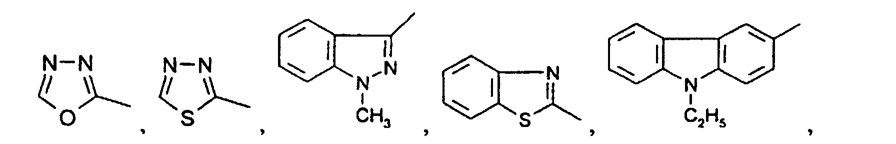 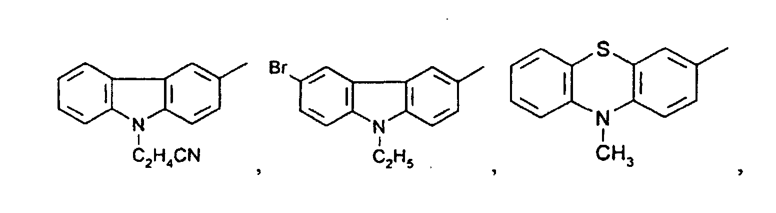 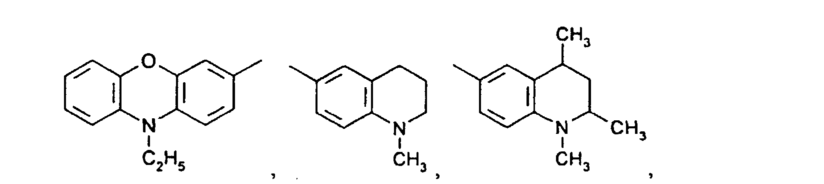 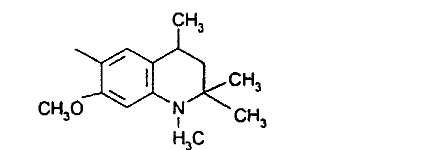 at a temperature of 70-150°C, preferably 80-120°C, particularly preferably 90-110°C,
and in a fourth reaction step the reaction solution being admixed with an organic or inorganic acid, especially hydrochloric acid, sulphuric acid, phosphoric acid, formic acid, acetic acid, propionic acid, glycolic acid, citric acid, lactic acid and gluconic acid, preferably formic acid or acetic acid.

More preferred compounds or mixtures are obtainable when
R₁ and R₂ are independently methyl or ethyl,
B₁ is C₂₋₆-alkylene, which may optionally be interrupted by one or more atoms selected from the group consisting of N, O and S, preferably by O, and which may additionally be substituted,
a and b are independently 0 or 1,
B₂ is C₁₋₄ alkylene, which may optionally be interrupted by one or more atoms selected from the group consisting of N, O and S, preferably by O, and which may additionally be substituted,
X is a halogen, preferably Cl,
Y is an epoxide,
D is 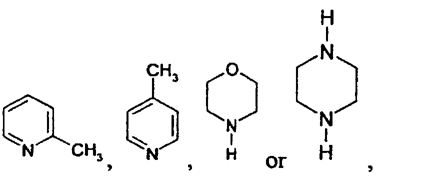 Z is 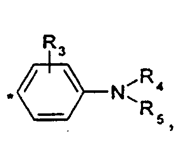 where the asterisk * symbolizes the bond to the -CHO group and R₃, R₄ and R₅ are independently H or a C₁₋₄-alkyl group, preferably R₃ is H or -CH₃ and R₄=R₅= -CH₃ or -CH₂CH₃.

Likewise more preferred compounds or mixtures are obtainable when the reaction solution is reacted with a mixture of compounds D in the second reaction step.

Ideally the reactions take place in a polar solvent, especially in alcohols, for example methanol, ethanol or glycols.

The new compounds obtained can directly be used as dyes or in the form of aqueous, for example, concentrated stable solutions for dyeing fibre material of all kinds, cellulose, cotton, keratinous fibres, for example hair, or leather, but in particular paper or paper products, especially woody paper, so-called groundwood, or else bast fibres such as hemp, flax, sisal, jute, coir or straw.

The compounds of the invention are notable for excellent water solubility.

The dyes of the invention can also be mixed with suitable dyes of the same or other dye classes and be used for dyeing and printing the abovementioned materials. More particularly, cationic or basic dyes, for example methine or azo dyes, are suitable for use in mixtures with the dyes of the invention.

The invention also provides for the use of an inventive compound or mixtures thereof for producing a storage-stable, liquid-aqueous dye preparation which includes a compound or mixtures thereof prepared according to the invention and/or their salts.

The invention also provides for the use of the compounds prepared according to the invention or of mixtures thereof or for the use of the storage-stable, liquid-aqueous dye preparation for dyeing or printing organic substrates, especially cellulose, cotton, keratinous substrates, for example hair, or leather, preferably paper or paper products, particularly preferably woody paper, so-called groundwood, or else bast fibres such as hemp, flax, sisal, jute, coir or straw.

The invention also provides organic substrates, especially cellulose, keratinous substrates, for example hair, or leather, preferably paper or paper products, particularly preferably woody paper, so-called groundwood, or else bast fibres such as hemp, flax, sisal, jute, coir or straw which have been dyed or printed with compounds prepared according to the invention or with mixtures thereof or with a storage-stable, liquid-aqueous dye preparation according to the invention
The examples which follow serve to illustrate the invention. In the examples, parts are weight per cent, unless otherwise stated; the temperatures are reported in degrees Celsius.

### Example 1:

139 parts of (±)-2-chloromethyloxirane (XB₂Y) are gradually added dropwise with gentle cooling to a solution of 58 parts of 1,6-diaminohexane (I) in 300 parts of 1,2-propylene glycol. On completion of the addition the mixture is subsequently stirred at 20-30°C for 3 hours, at which point 93 parts of 4-picoline (D) are added. The solution is gradually heated to 90-100°C and stirred at that temperature for 3 hours. Then 25 parts of piperazine (D) are added, and stirring is continued at 90-100°C for a further 30 minutes. 116 parts of 4-dimethylaminobenzaldehyde (II) are then added, and stirring is continued at about 100°C for a further 2 hours. Finally the batch is diluted with a mixture of 450 parts of water and 310 parts of acetic acid.
The about 28% strength dye solution dyes woody materials in brilliant orange shades with minimal wastewater contamination.

Example 1 was repeated to prepare further dyes whose hues in paper dyeing are reported in the table which follows:

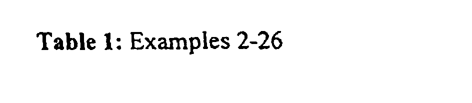

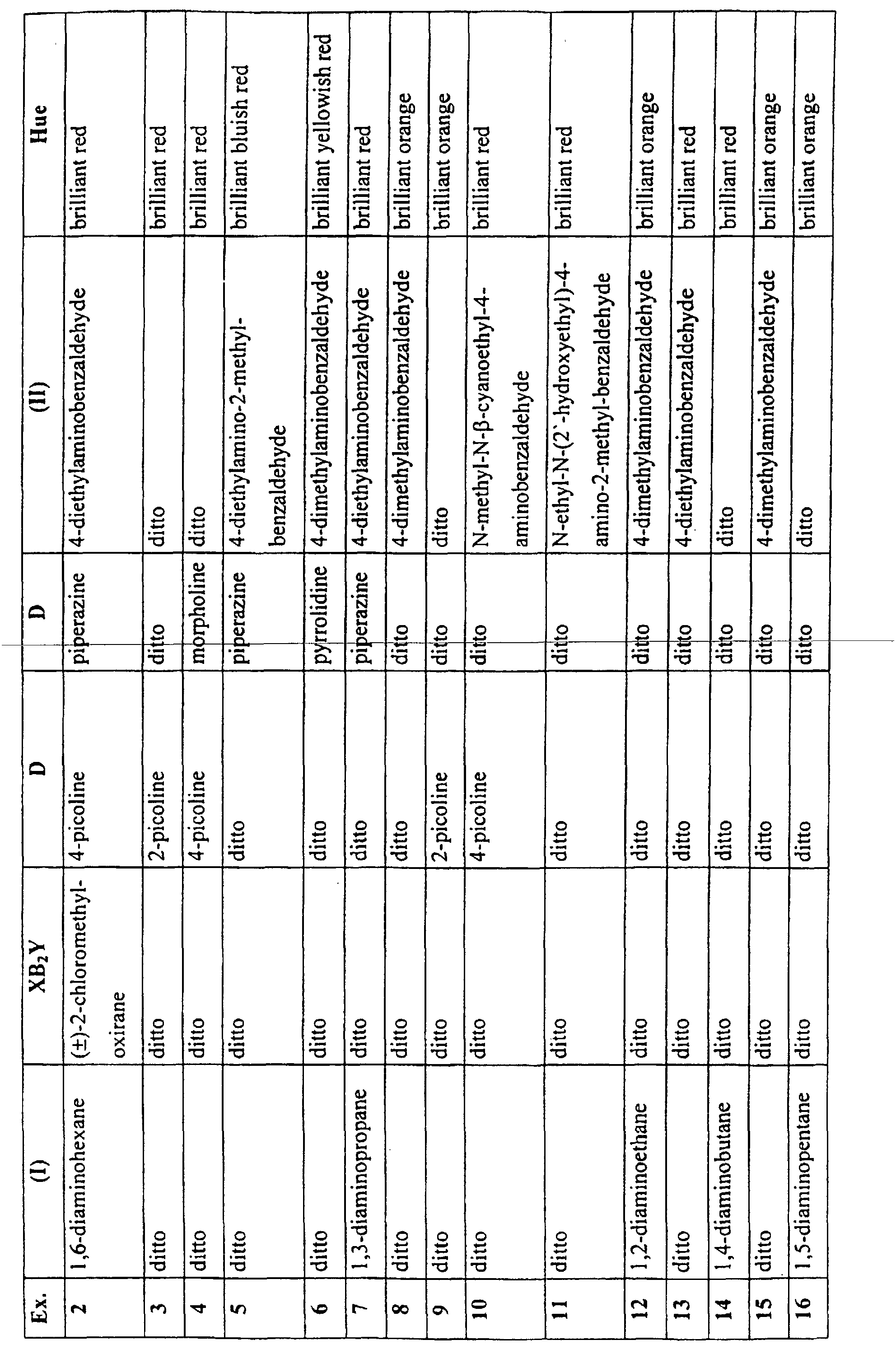

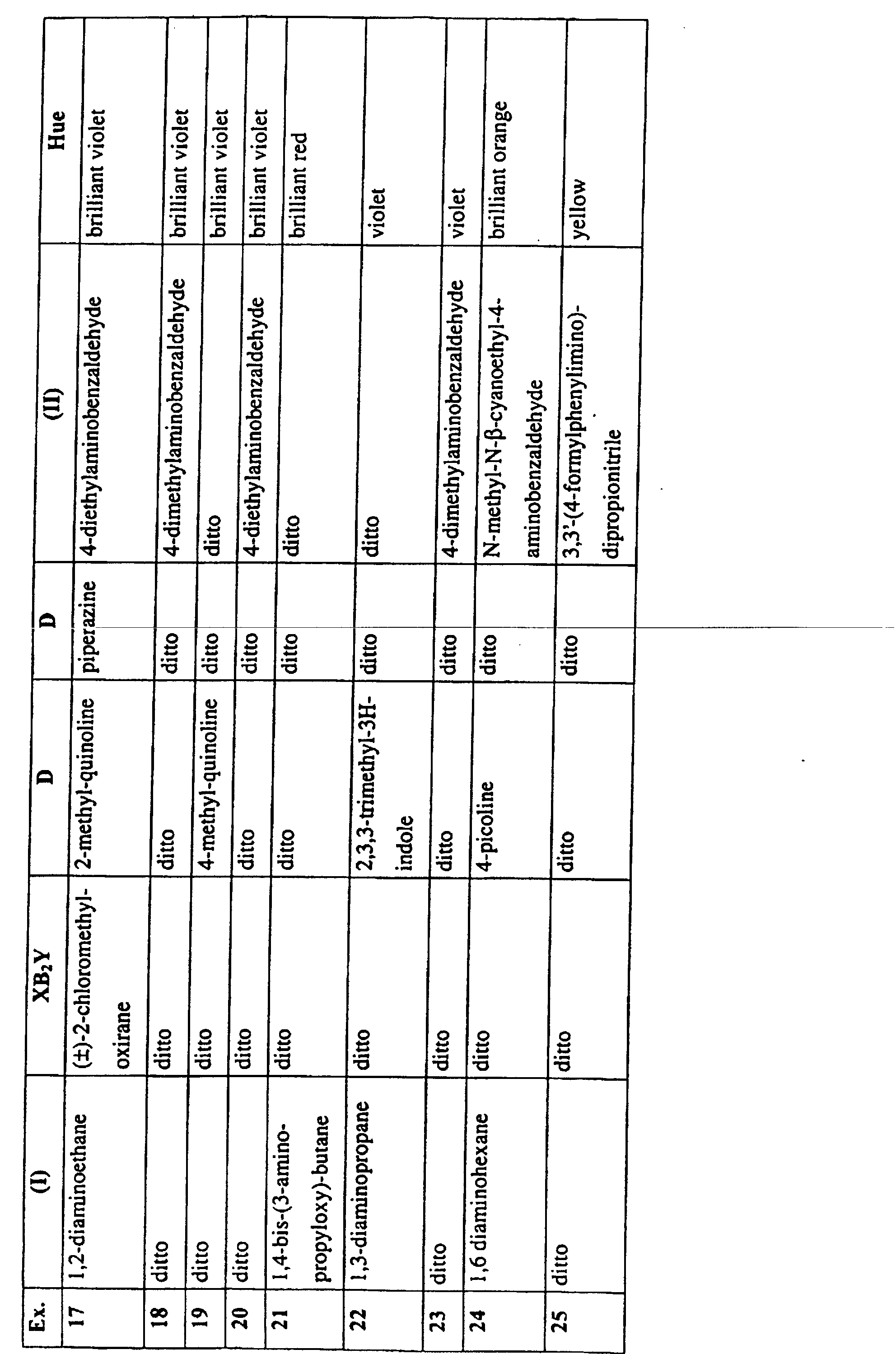

The use examples which follow serve to illustrate the invention. In the examples, parts are weight per cent, unless otherwise stated; the temperatures are reported in degrees Celsius.

### Use Example A

A hollander is used to grind 70 parts of chemically bleached sulphite softwood cellulose and 30 parts of chemically bleached sulphite birchwood cellulose into 2000 parts of water. 0.2 part of the dye from Example 1 is sprinkled in. After a mixing time of 20 minutes paper is made from the stuff. The thusly obtained absorbent paper has a yellowish red colour. The wastewater is colourless.

### Use Example B

0.5 part of the dye solution of Example 1 is poured into 100 parts of bleached sulphite cellulose ground with 2000 parts of water in a hollander. Mixing for 15 minutes was followed by sizing. Paper made from this material has a yellowish red hue.

### Use Example C

An absorbent web of unsized paper is pulled at 40-50°C through a dye solution of the following composition:

| | |
|---|---|
| 0.5 part | of the dye of Example 1, |
| 0.5 part | of starch and |
| 99.0 parts | of water |

Excess dye solution is squeezed off by two rolls. The dry paper web has a yellowish red colour.

The method of Use Examples A to C is also suitable for dyeing with the dyes of the other examples.

### Use Example D

15 kg of wastepaper (woody), 25 kg of bleached groundwood and 10 kg of unbleached sulphate pulp were beaten in a pulper to form a 3% aqueous pulp suspension. The pulp suspension was diluted to 2% in a dyeing vat. This suspension was then admixed in succession with 5% of kaolin and 1.25 kg of a 5% acetic acid solution of the dye of Example 1, reckoned on dry total fibre, by stirring. After 20 minutes the pulp in the mixing vat is admixed with 1% (based on absolutely dry fibre) of a resin size dispersion. The homogeneous pulp suspension was adjusted with alum to pH 5 on the paper machine just upstream of the headbox.
The paper machine was used to produce 80 g/m² of yellowish red bag paper with a machine finish.

### Use Example E

A dry stock consisting of 60% groundwood and 40% unbleached sulphite pulp is beaten with sufficient water and ground to 40 SR freeness in a hollander for the dry content to be just above 2.5% and then adjusted with water to a dry content of exactly 2.5% for the high-density pulp.
200 parts of this high-density pulp are admixed with 5 parts of a 0.25% aqueous solution of the dye of Example 1, stirred for about 5 min., admixed with 2% of resin size and 4% of alum, based on dry stock, and again stirred for some minutes until homogeneous. The material is diluted with 500 parts of water to 700 parts by volume and used in a known manner to prepare sheets of paper by drainage on a sheet-former. These sheets of paper have a deep yellowish red colour.

The method of Use Examples D and E is also suitable for dyeing with the dyes of the other examples.

## Claims

1. Compounds or their mixtures obtainable by reacting in a first reaction step a diamine of the following formula (I) 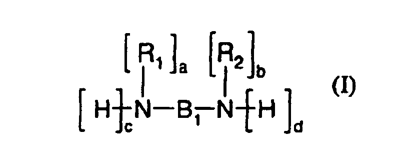 where
R₁ and R₂ are independently substituted or unsubstituted C₁₋₄alkyl or substituted or unsubstituted phenyl,
B₁ is C₂₋₁₀alkylene, which may optionally be interrupted by one or more atoms selected from the group consisting of N, O and S and which may additionally be substituted,
a, b, c and d are each 0,1, or 2, subject to the provisos that the sum a+c=2 and the sum b+d=2,
at a temperature of 10-50°C with at least 2.5 equivalents of a compound of the formula XB₂Y where
B₂ is C₁₋₁₀alkylene, which may optionally be interrupted by one or more atoms selected from the group consisting of N, O and S and which may additionally be substituted, and
X and Y are independently a leaving group or a group suitable for alkylating N, and in a second reaction step the reaction solution being reacted with a compound D or a plurality of compounds D,
where D is one of the following compounds: 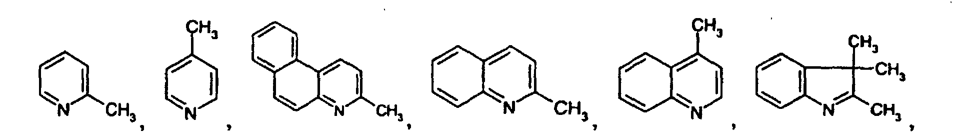 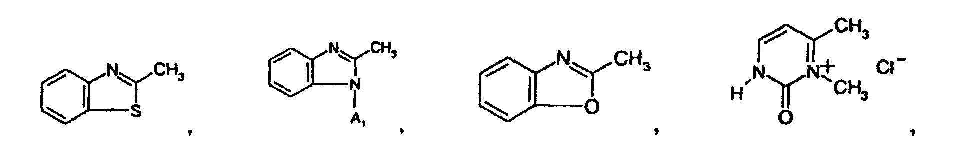 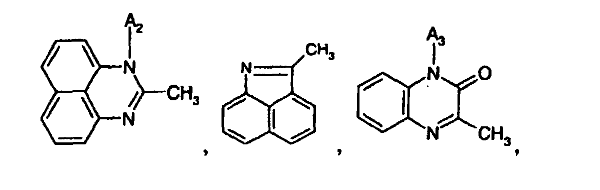 where A₁, A₂ and A₃ are independently C₁₋₄alkyl, benzyl, cyclohexyl, hydroxyalkyl or C₂₋₃alkenyl and the rings of the above radicals may be unsubstituted or substituted by halogen, cyano, C₁₋₄alkyl, C₁₋₄hydroxyalkyl or C₁₋₄alkoxy,
or D is HO⁻, N,N-di-C₁₋₄alkylamines or cycloamines selected from, the group consisting of morpholine, piperazine and piperidine,
at a temperature of 70-150°C,
and in a third reaction step the reaction solution being reacted with a compound of the formula (II) 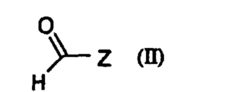 or a mixture thereof,
where Z is phenyl unsubstituted or substituted by hydroxyl, alkoxycarbonyl, N-substituted or unsubstituted carbamoyl, alkyl, alkoxy, amino or substituted amino, unsubstituted or alkyl-, alkoxy-, hydroxyl-, carboxyl- or (substituted amino)-substituted naphthyl, styryl, furyl, thienyl, pyridyl, indolyl, benzofuryl, benzothienyl, pyrazolyl, oxazolyl, thiazolyl, triazolyl, oxadiazolyl, thiadiazolyl, benzimidazolyl, indazolyl, benzoxazolyl, benzothiazolyl, carbazolyl, phenothiazinyl or phenoxazinyl, at a temperature of 70-150°C,
and in a fourth reaction step the reaction solution being admixed with an organic or inorganic acid.

2. Compounds or mixtures obtainable according to Claim 1 **characterized in that**
R₁ and R₂ are independently methyl or ethyl,
B₁ is C₂₋₆alkylene, which may optionally be interrupted by one or more atoms selected from the group consisting of N, O and S and which may additionally be substituted,
a and b are independently 0 or 1,
B₂ is C₁₋₄ alkylene, which may optionally be interrupted by one or more atoms selected from the group consisting of N, O and S and which may additionally be
substituted,
X is a halogen,
Y is an epoxide,
D is 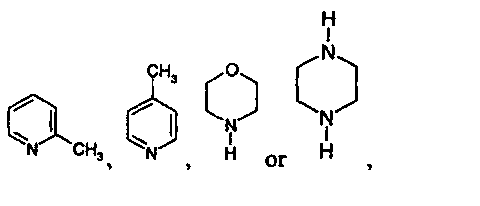 Z is 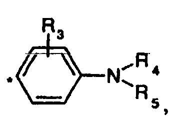 where the asterisk * symbolizes the bond to the -CHO group and R₃, R₄ and R₅ are independently H or a C₁₋₄-alkyl group and hydrochloric acid, sulphuric acid, phosphoric acid, formic acid, acetic acid, propionic acid, glycolic acid, citric acid, lactic acid or gluconic acid is used in a fourth reaction step.

3. Compounds or their mixtures obtainable according to Claims 1 or 2 **characterized in that** the reaction solution is reacted with a mixture of compounds D.

4. Compounds or their mixtures obtainable according to any of Claims 1 to 3, **characterized in that** the reaction temperature is 15-40°C in the first reaction step and 80-120°C in the second and third reaction steps.

5. Use of a compound or mixtures thereof according to any of Claims 1 to 4 in water-soluble form for producing a storage-stable, liquid-aqueous dye preparation.

6. Use of a compound or mixtures thereof obtainable according to any of Claims 1 to 4 or of a storage-stable, liquid-aqueous dye preparation according to Claim 5 for dyeing or printing organic substrates.

7. Use according to Claim 6, **characterized in that** cellulose, cotton, keratinous substrates or leather are used as organic substrates.

8. Use according to Claim 7, **characterized in that** paper or paper products, especially woody paper, so-called groundwood are used as organic substrates.

9. Organic substrates dyed or printed with compounds or mixtures obtainable according to any of Claims 1 to 4 or a storage-stable, liquid-aqueous dye preparation according to Claim 5.

10. Organic substrates according to Claim 9, **characterized in that** these organic substrates are cellulose, keratinous substrates or leather.

11. Organic substrates according to Claim 10, **characterized in that** these organic substrates are paper or paper products, preferably woody paper, so-called groundwood, or else bast fibres such as hemp, flax, sisal, jute, coir or straw.

## Patentansprüche

1. Verbindungen oder Gemische davon erhältlich dadurch, dass in einem ersten Reaktionsschritt ein Diamin der nachfolgenden Formel (I) 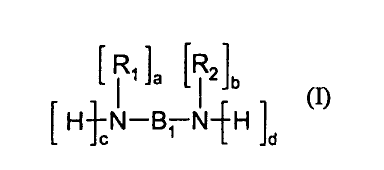 worin
R₁ und R₂ unabhängig voneinander gegebenenfalls substituiertes C₁₋₄Alkyl oder gegebenenfalls substituiertes Phenyl bedeuten,
B₁ C₂₋₁₀Alkylen, welches gegebenenfalls durch ein oder mehrere Atome aus der Reihe N, O oder S unterbrochen sein kann, und welches gegebenenfalls zusätzlich substituiert sein kann, darstellt,
a, b, c und d die Werte 0, 1, 2 annehmen können, mit den Bedingungen, dass die Summe a+c=2 und die Summe b+d=2 ist,
bei einer Temperatur von 10 - 50°C mit mindestens 2,5 Äquivalenten einer Verbindung der Formel
XB₂Y
worin
B₂ C₁₋₁₀Alkylen, welches gegebenenfalls durch ein oder mehrere Atome aus der Reihe N, O oder S unterbrochen sein kann, und welches gegebenenfalls zusätzlich substituiert sein kann, dar-stellt und
X und Y unabhängig voneinander eine Abgangsgruppe oder eine zur Alkylierung von N geeignete Gruppe sind,
umgesetzt wird und in einem zweiten Reaktionsschritt die Reaktionslösung mit einer Verbindung D oder mehreren Verbindungen D, wobei D eine der folgenden Verbindungen darstellt: 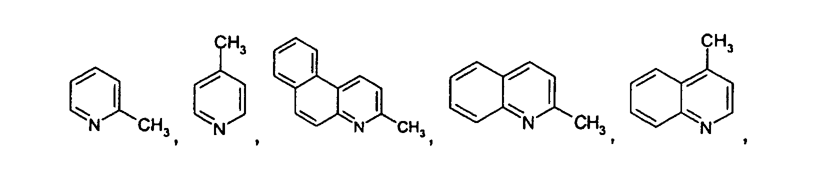 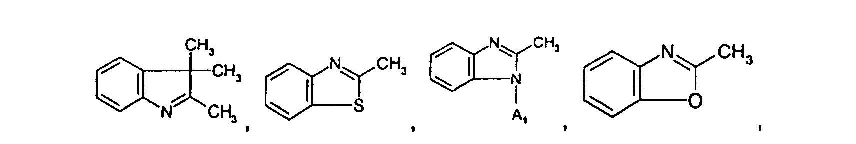 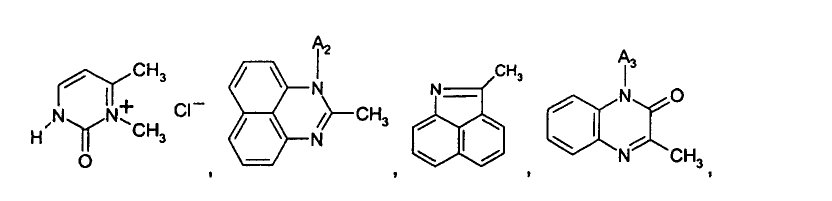 worin A₁, A₂ und A₃ unabhängig voneinander für C₁₋₄Alkyl, Benzyl, Cyclohexyl, Hydroxyalkyl oder C₂₋₃Alkenyl stehen und die Ringe der obigen Reste unsubstituiert sein können oder durch Halogen, Cyano C₁₋₄Alkyl, C₁₋₄Hydroxyalkyl oder C₁₋₄Alkoxy substituiert sein können,
oder D HO⁻, N,N-Di-C₁₋₄alkylamine oder cyclische Amine aus der Gruppe Morpholin, Piperazin oder Piperidin bedeutet, bei einer Temperatur von 70 - 150°C umgesetzt wird, und in einem dritten Reaktionsschritt die Reaktionslösung mit einer Verbindung der Formel (II) 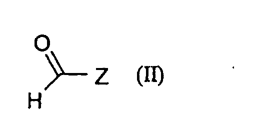 oder einem Gemisch davon,
worin Z gegebenenfalls durch Hydroxy, Alkoxycarbonyl, gegebenenfalls N-substituiertes Carbamoyl, Alkyl, Alkoxy, Amino oder substituiertes Amino substituiertes Phenyl, gegebenenfalls durch Alkyl, Alkoxy, Hydroxy, Carboxy oder substituiertes Amino substituiertes Naphthyl, Styryl, Furyl, Thienyl, Pyridyl, Indolyl, Benzofuryl, Benzothienyl, Pyrazolyl, Oxazolyl, Thiazolyl, Triazolyl, Oxadiazolyl, Thiadiazolyl, Benzimidazolyl, Indazolyl, Benzoxazolyl, Benzothiazolyl, Carbazolyl, Phenothiazinyl oder Phenoxazinyl bedeutet,
bei einer Temperatur von 70 - 150°C umgesetzt wird, und in einem vierten Reaktionsschritt die Reaktionslösung mit einer organischen oder anorganischen Säure versetzt wird.

2. Verbindungen oder Gemische erhältlich gemäss Anspruch 1, **dadurch gekennzeichnet, dass**
R₁ und R₂ unabhängig voneinander Methyl oder Ethyl sind,
B₁ C₂₋₆Alkylen, welches gegebenenfalls durch ein oder mehrere Atome aus der Reihe N, O oder S unterbrochen sein kann, und welches gegebenenfalls zusätzlich substituiert sein kann,
a und b unabhängig voneinander 0 oder 1 sind,
B₂ C₁₋₄Alkylen, welches gegebenenfalls durch ein oder mehrere Atome aus der Reihe N, O oder S unterbrochen sein kann, und welches gegebenenfalls zusätzlich substituiert sein kann,
X ein Halogen ist,
Y ein Epoxid ist,
D ist 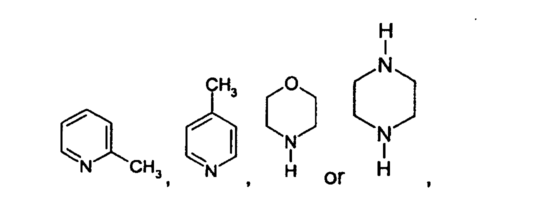
Z ist 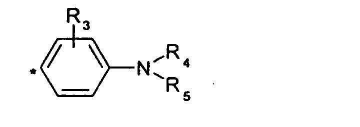 worin der Stern * die Bindung zur -CHO-Gruppe symbolisiert und R₃, R₄ und R₅ unabhängig voneinander H oder eine C₁₋₄Alkyl-Gruppe darstellen und Salzsäure, Schwefelsäure, Phosphorsäure, Ameisensäure, Essigsäure, Propionsäure, Glycolsäure, Zitronensäure, Milchsäure oder Gluconsäure in einem vierten Reaktionsschritt verwendet wird.

3. Verbindungen oder Gemische davon erhältlich gemäss Ansprüchen 1 oder 2, **dadurch gekennzeichnet, dass** die Reaktionslösung mit einem Gemisch von Verbindungen D umgesetzt wird.

4. Verbindungen oder Gemische davon erhältlich gemäss einem der Ansprüche 1 - 3, **dadurch gekennzeichnet, dass** die Reaktionstemperatur im ersten Reaktionsschritt 15 - 40°C, im zweiten und im dritten Reaktionsschritt 80 - 120°C beträgt.

5. Verwendung einer Verbindung oder von Gemischen davon gemäss einem der Ansprüche 1 - 4, in wasserlöslicher Form, zur Herstellung einer lagerstabilen, flüssig-wässrigen Farbstoffpräparation.

6. Verwendung einer Verbindung oder von Gemischen davon, erhältlich gemäss einem der Ansprüche 1 - 4 oder einer lagerstabilen, flüssig-wässrigen Farbstoffpräparation gemäss Anspruch 5 zum Färben oder Bedrucken organischer Substrate.

7. Verwendung nach Anspruch 6, **dadurch gekennzeichnet, dass** Cellulose, Baumwolle, keratinhaltige Substrate oder Leder als organische Substrate verwendet werden.

8. Verwendung nach Anspruch 7, **dadurch gekennzeichnet, dass** man als organische Substrate Papier oder Papierprodukte, insbesondere holzartiges Papier, sogenannten Holzschliff, einsetzt.

9. Organische Substrate, welche mit Verbindungen oder Gemischen erhältlich gemäss einem der Ansprüche 1 - 4 oder einer lagerstabilen, flüssig-wässrigen Farbstoffpräparation gemäss Anspruch 5 gefärbt oder bedruckt wurden.

10. Organische Substrate nach Anspruch 9, **dadurch gekennzeichnet, dass** diese Cellulose, keratinhaltige Substrate oder Leder sind.

11. Organische Substrate nach Anspruch 10, **dadurch gekennzeichnet, dass** diese Papier oder Papierprodukte, insbesondere holzartiges Papier, sogenannter Holzschliff, oder auch Bastfasern wie Hanf, Flachs, Sisal, Jute, Kokos oder Stroh sind.

## Revendications

1. Composés ou leurs mélanges pouvant être obtenus par réaction, dans une première étape de réaction, d'une diamine de formule (1) suivante 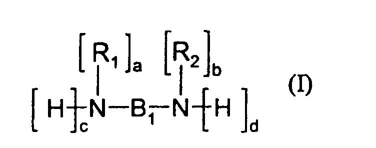 dans laquelle
R₁ et R₂ sont indépendemment un alkyle en C₁₋₄ substitué ou non substitué ou un phényle substitué ou non substitué,
B₁ est un alkylène en C₂₋₁₀, qui peut éventuellement être interrompu par un ou plusieurs atomes choisis parmi le groupe constitué de N, de O et de S et qui peut en outre être substitué,
a, b, c et d valent chacun 0, 1 ou 2, à condition que la somme a+c = 2 et que la somme b+d = 2,
à une température de 10 à 50°C, avec au moins 2,5 équivalents d'un composé de formule
XB₂Y
dans laquelle
B₂ est un alkylène en C₁₋₁₀, qui peut éventuellement être interrompu par un ou plusieurs atomes choisis parmi le groupe constitué de N, de O et de S et qui peut en outre être substitué, et
X et Y sont indépendemment un groupe partant ou un groupe approprié pour l'alkylation de N, et
dans une deuxième étape de réaction, la solution réactionnelle étant mise à réagir avec un composé D ou plusieurs composés D, où D est l'un des composés suivants : 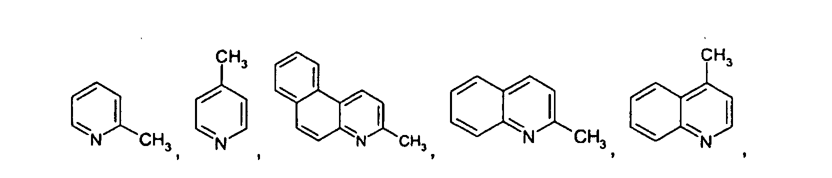 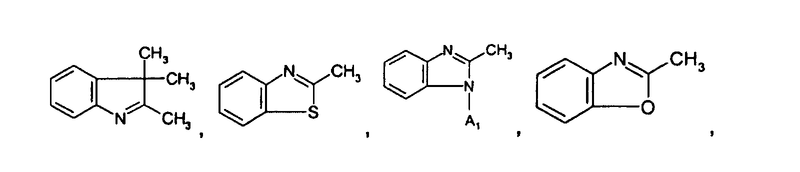 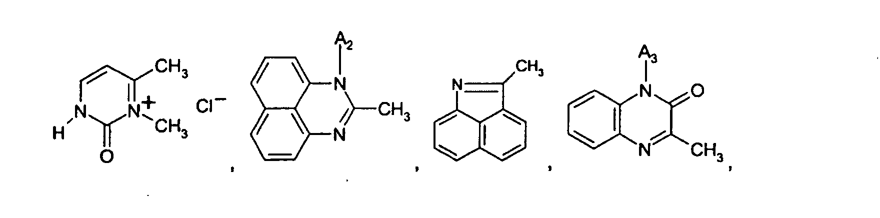 dans lesquels A₁, A₂ et A₃ sont indépendemment un alkyle en C₁₋₄, un benzyle, un cyclohexyle, un hydroxyalkyle ou un alcényle en C₂₋₃, et les noyaux des radicaux ci-dessus peuvent être non substitués ou substitués par un halogène, un cyano, un alkyle en C₁₋₄, un hydroxyalkyle en C₁₋₄ ou un alcoxy en C₁₋₄,
ou D est HO⁻, des N,N-di-C₁₋₄-alkylamines ou des cycloamines choisies parmi le groupe constitué de la morpholine, de la pipérazine et de la pipéridine, à une température de 70 à 150°C,
et dans une troisième étape de réaction, la solution réactionnelle étant mise à réagir avec un composé de formule (II) 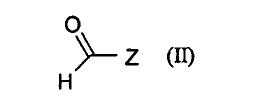 ou un mélange de tels composés,
dans laquelle Z est un phényle non substitué ou substitué par un hydroxy, un alcoxycarbonyle, un carbamoyle N-substitué ou non substitué, un alkyle, un alcoxy, un amino ou un amino substitué, un naphtyle, non substitué ou substitué par un alkyle, un alcoxy, un hydroxy, un carboxy ou un amino substitué, un styryle, un furyte, un thiényle, un pyridyle, un indolyle, un benzofuryle, un benzothiényle, un pyrazolyle, un oxazolyle, un thiazolyle, un triazolyle, un oxadiazolyle, un thiadiazolyle, un benzimidazolyle, un indazolyle, un benzoxazolyle, un benzothiazolyle, un carbazolyle, un phénoxythiazinyle ou un phénoxazinyle,
à une température de 70 à 150°C, et dans une quatrième étape de réaction, la solution réactionnelle étant mélangée avec un acide organique ou inorganique.

2. Composés ou mélanges pouvant être obtenus selon la revendication 1, caractérisés en ce que
R₁ et R₂ sont indépendamment un méthyle ou un éthyle,
B₁ est un alkylène en C₂₋₆ qui peut éventuellement être interrompu par un ou plusieurs atomes choisis parmi le groupe constitué de N, de O et de S et qui éventuellement être substitué,
a et b valent indépendemment 0 ou 1,
B₂ est un alkylène en C₁₋₄ qui peut éventuellement être interrompu par un ou plusieurs atomes choisis parmi le groupe constitué de N, de O et de S et qui peut éventuellement être substitué,
X est un halogène,
Y est un époxyde,
D est 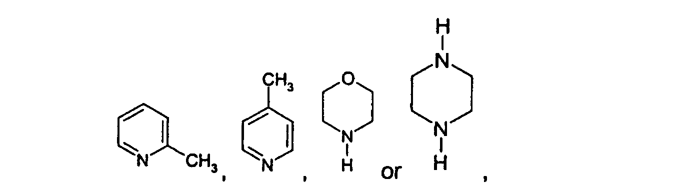
Z est 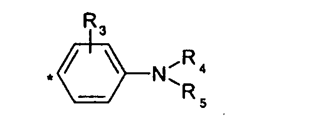 où l'astérique * symbolise la liaison au groupe -CHO et R₃, R₄ et R₅ sont indépendemment H ou un groupe alkyle en C₁₋₄, et de l'acide chlorhydrique, de l'acide sulfurique, de l'acide phosphorique, de l'acide formique, de l'acide acétique, de l'acide propionique, de l'acide glycolique, de l'acide citrique, de l'acide lactique ou de l'acide gluconique est utilisé dans une quatrième étape de réaction.

3. Composés ou leurs mélanges pouvant être obtenus selon les revendications 1 ou 2, **caractérisés en ce que** la solution réactionnelle est mise à réagir avec un mélange de composés D.

4. Composés ou leurs mélanges pouvant être obtenus selon l'une quelconque des revendications 1 à 3, **caractérisés en ce que** la température de réaction est de 15 à 40°C dans la première étape de réaction et de 80 à 120°C dans les deuxième et troisième étapes de réaction.

5. Utilisation d'un composé ou de leurs mélanges selon l'une quelconque des revendications 1 à 4 sous forme hydrosoluble pour la production d'une préparation de colorant liquide aqueuse stable au stockage.

6. Utilisation d'un composé ou de mélanges de celui-ci pouvant être obtenus selon l'une quelconque des revendications 1 à 4 ou d'une préparation de colorant liquide aqueuse stable au stockage selon la revendication 5 pour la teinture ou l'impression de substrats organiques.

7. Utilisation selon la revendication 6, **caractérisée en ce que** la cellulose, le coton, des substrats kératiniques ou le cuir sont utilisés en tant que substrats organiques.

8. Utilisation selon la revendication 7, **caractérisée en ce que** le papier ou des produits du papier, en particulier le papier ligneux, ce que l'on appelle la pâte mécanique, sont utilisés en tant que substrats organiques.

9. Substrats organiques teints ou imprimés avec des composés ou des mélanges pouvant être obtenus selon l'une quelconque des revendications 1 à 4 ou une préparation de colorant liquide aqueuse stable au stockage selon la revendication 5.

10. Substrats organiques selon la revendication 9, **caractérisés** en que ces substrats organiques sont la cellulose, des substrats kératiniques et le cuir.

11. Substrats organiques selon la revendication 10, **caractérisés** en que ces substrats organiques sont le papier ou des produits du papier, de préférence le papier ligneux, ce que l'on appelle la pâte mécanique, ou bien des fibres libériennes telles que le chanvre, le lin, le sisal, le jute, le coir ou la paille.
